# EUROPÄISCHE PATENTANMELDUNG

(11) **EP 0 600 270 A1**
(43) Veröffentlichungstag der Anmeldung: **08.06.1994**
(21) Anmeldenummer: 93118164.8
(22) Anmeldetag: 10.11.1993
(51) Int. Cl.: H02K 15/02, H02K 7/08, H02K 1/22

(54) **Elektromotor, insbesondere zum Antrieb von Kraftfahrzeugen**

(30) Priorität: 28.11.1992 DE 4240045
(71) Anmelder: Licentia Patent-Verwaltungs-GmbH, D-60596 Frankfurt (DE)
(72) Erfinder: Altmann, Manfred, Dipl.-Ing., D-26133 Oldenburg (DE); Tillner, Siegfried, Dipl.-Ing., D-26125 Olenburg (DE); Oltmanns, Karl-Heinz, Dipl.-Ing., D-26123 Oldenburg (DE)
(74) Vertreter: Vogl, Leo, Dipl.-Ing.

(57) **Zusammenfassung**

Elektromotore insbesondere zum Antrieb von Kraftfahrzeugen erfordern neben einem kompakten und billigen Aufbau und einer hohen Leistungsfähigkeit auch ein möglichst geringes Gesamtgewicht. Dieses wird erfindungsgemäß dadurch erzielt, daß die Rotorwelle (11) aus einem eine Hohlwelle bildenden, rohrförmigen Verbindungsstück (31) besteht, an das A- und B-seitig je ein Endstück (33, 35) mit einer Lagerstelle (37, 39) für die Lager (21, 23) durch Reibschweißen stofflüssig befestigt sind. Mit der gewichtsarmen Rotorwelle (11) wird eine erhebliche Gewichtseinsparung bei leistungsstarken Elektromotoren erzielt.

## Beschreibung

Die Erfindung betrifft einen Elektromotor, insbesondere einen Asynchronmotor zum Antrieb von Kraftfahrzeugen der im Oberbegriff des Patentanspruchs 1 angegebenen Art.

Elektromotore mit Innenläufer sind seit langem in zahlreichen verschiedenen Ausführungsformen bekannt, und es wird auch seit langem angestrebt, die Herstellkosten dieser Motoren bei Wahrung ihrer Qualität zu senken bzw. gleichzeitig ihre elektrischen und mechanischen Eigenschaften noch zu verbessern.

Bei Elektromotoren insbesondere zum Antrieb von Kraftfahrzeugen wird außerdem gefordert, daß sie kompakt und leistungsstark ausgebildet sind und außerdem ein möglichst geringes Gewicht aufweisen sollen. Aufgrund dieser Gewichtsersparnis wird der Energieverbrauch des Fahrzeugs entsprechend gesenkt.

Der Erfindung liegt nun die Aufgabe zugrunde, einen Elektromotor, insbesondere einen leistungsstarken Elektromotor zum Antrieb von Kraftfahrzeugen zu schaffen, der sich gegenüber den bisherigen Elektromotoren durch eine erhebliche Gewichtseinsparung auszeichnet und der dabei einfach und kostengünstig herstellbar ist. Diese Aufgabe wird durch die im Patentanspruch 1 gekennzeichneten Merkmale gelöst.

Der erfindungsgemäße Elektromotor zeichnet sich durch eine leichtgewichtige Rotorwelle aus, die aus separat hergestellten Einzelteilen besteht, welche durch Verwendung der ansich bekannten Reibschweißung auf einfachste Weise miteinander verbunden werden. Da die Werkstoffe der einzelnen Teile unterschiedlich ausgewählt werden können, ergibt sich eine kostengünstige Herstellung der Rotorwelle und damit des Elektromotors.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Längsschnitt durch einen geschlossenen Elektromotor,

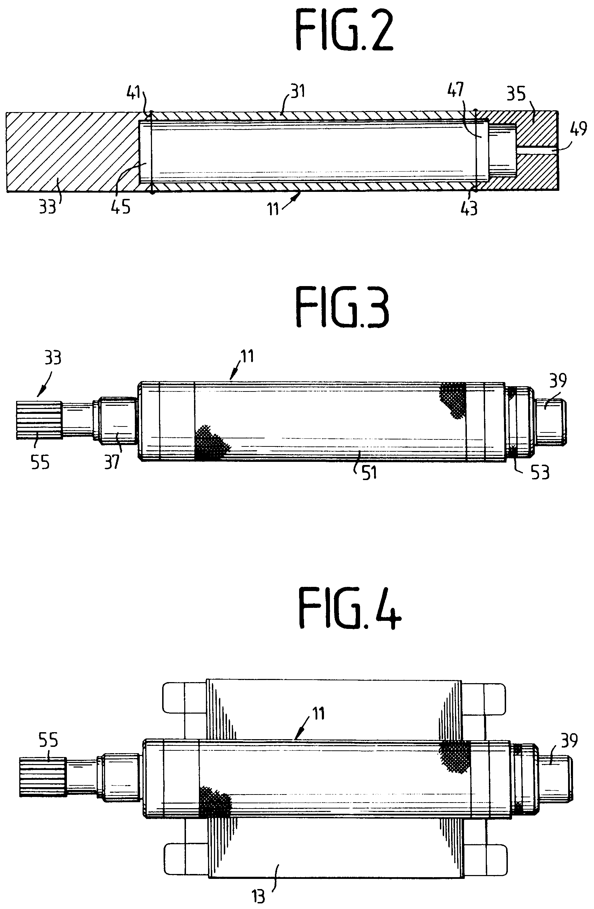

- Figur 2: die Rotorwelle nach der Reibschweißverbindung der Einzelteile,
- Figur 3: die Rotorwelle gemäß Figur 2 nach spanabhebender Bearbeitung und
- Figur 4: die Rotorwelle mit dem Rotorblechpaket.

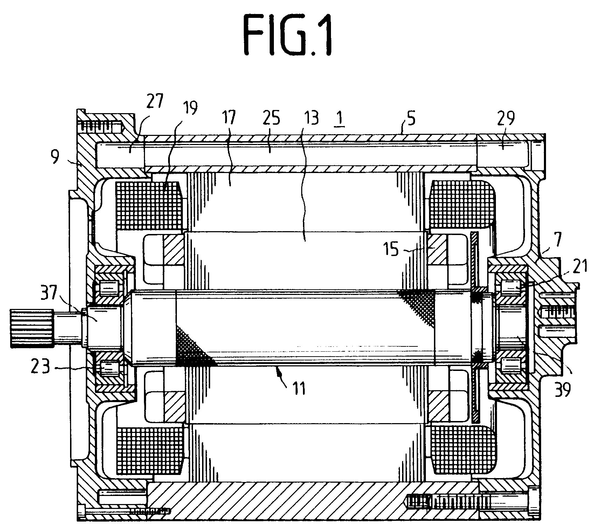

Die Figur 1 zeigt einen Elektromotor 1 mit einem geschlossenen Gehäuse 3, insbesondere einen Asynchronmotor zum Antrieb eines Kraftfahrzeuges. Das Motorgehäuse 3 besteht aus einem zylindrischen Gehäusemantel 5, dessen beide offene Stirnseiten einerseits durch ein erstes Lagerschild 7 und andererseits durch ein zweites Lagerschild 9 abgedichtet sind. Dieses Motorgehäuse 3 enthält einen Motor mit einer Rotorwelle 11, einem Rotor 13, Kurzschlußringen 15, einem Stator 17 und mit Statorwickelköpfen 19. Die Rotorwelle 11 ist mittels Wälzlager 21, 23 in den Lagerschilden 7, 9 drehbar gelagert. Weiterhin weist der aus Metall bestehende zylindrische Gehäusemantel 5 in Umfangsrichtung gleichmäßig verteilt und achsensymmetrisch zum Rotor 13 bzw. Stator 17 angeordnete Längskanäle 25 auf, welche über Verbindungskanäle 27, 29 in den Lagerschilden 7, 9 derart flüssigkeitsleitend miteinander in Verbindung stehen, daß die Kühlflüssigkeit den Gehäusemantel 5 mäanderförmig durchläuft. Eine derartig wirkungsvolle Kühlung ist für den kompakt ausgebildeten, leistungsstarken Elektromotor 1 zum Antrieb von Kraftfahrzeugen erforderlich. Das Gesamtgewicht dieses Elektromotors 1 wird erfindungsgemäß dadurch reduziert, daß die Rotorwelle 11 aus einem eine Hohlwelle bildenden, rohrförmigen Verbindungsstück 31 besteht, an das A- und B-seitig je ein Endstück 33, 35 mit einer Lagerstelle 37, 39 für die Lager 21, 23 durch Reibschweißen stoffschlüssig befestigt sind. Aus diesem Grunde ist es möglich, für die Einzelteile je nach der Anforderung unterschiedliche Werkstoffe auszuwählen. So bestehen das rohrförmige Verbindungsstück 31 und das B-seitige Endstück 35 aus einem einfachen Kohlenstoffstahl, z. B. aus einem Stahl ST35 oder ST37, während das A-seitige Endstück 33 aus einem härtbaren Stahl hergestellt ist. Dieses Endstück 33 kann daher auch für sich allein gehärtet werden, wodurch sich die Herstellungskosten ebenfalls reduzieren lassen. Die Endstücke 33, 35 weisen an ihren mit dem Verbindungsstück 31 zu verschweißenden Stirnflächen 41, 43 zentrisch angeordnete Sacklochbohrungen 45, 47 auf, derart, daß die zu verschweißenden Flächen der Endstücke 33, 35 und des Verbindungsstückes 31 gleich groß ausgebildet sind. Hierdurch wird eine schnelle und sichere Verbindung zwischen den Einzelteilen der Rotorwelle 11 geschaffen. Um einen Überdruck in dem rohrförmigen Verbindungsstück 31 während des Reibschweißvorganges zu verhindern, kann ein Endstück 33, 35 mit einer Druckausgleichsöffnung versehen werden. Vorteilhaft ist diese Druckausgleichsöffnung in dem B-seitigen Endstück 35 angeordnet, da diese eine kürzere Länge aufweist als das A-seitige Endstück 33. Auch werden an dem Endstück 35 nicht so hohe Anforderungen bezüglich Festigkeit gestellt als dies bei dem A-seitigen Endstück 33 der Fall ist. Die Druckausgleichsöffnung besteht aus einer in axialer Richtung zentrisch in dem B-seitigen Endstück 35 angeordneten Durchgangsbohrung 49. Auch sind die Endstücke 33, 35 aus einem Rundmaterial hergestellt, was handelsüblich bezogen werden kann.

Die Rotorwelle 11 ist auch einfach in der Herstellung, wobei zunächst die Endstücke 33, 35 mit den Sacklochbohrungen 45, 47 und das rohrförmige Verbindungsstück 31 jeweils getrennt aus Rundmaterial und aus Stahlrohrprofilen mit gleichem Außendurchmesser hergestellt werden. Dann werden die Endstücke 33, 35 durch Reibschweißen mit dem Verbindungsstück 31 stoffschlüssig verbunden, woran sich dann eine spanabhebende Bearbeitung für die Herstellung der Lagerflächen 37, 39 auf den Enstücken 33, 35, der Lageraufnahme 53 für einen Tacho auf dem B-seitigen Endstück 35, der gerändelten Außenumfangsfläche 51 auf dem Verbindungsstück 31 zum Befestigen des Rotorblechpaketes 13 und des Antriebsritzels 55 auf dem A-seitigen Endstück 33 anschließt. Abschließend wird dann noch das Antriebsritzel 55 auf dem A-seitigen Endstück 33 einem Härteprozeß unterzogen. Durch diese Fertigungsmethode wird der Anteil hochwertiger Stähle für die Rotorwelle auf das unbedingt notwendige reduziert.

Die erfindungsgemäße Rotorwelle 11 zeichnet sich durch ein geringes Gesamtgewicht aus, deren Einzelteile einfach und billig herzustellen und miteinander zu verbinden sind.

## Patentansprüche

1. Elektromotor, insbesondere zum Antrieb von Kraftfahrzeugen mit einem Rotor, dessen Rotorwelle beidseitig mittels Lager in Lagerschilden eines Motorgehäuses drehbar gelagert ist, und mit einem den Rotor umgebenden Stator, **dadurch gekennzeichnet,** daß die Rotorwelle (11) aus einem eine Hohlwelle bildenden, rohrförmigen Verbindungsstück (31) besteht, an das A- und B-seitig je ein Endstück (33, 35) mit einer Lagerstelle (37, 39) für die Lager (21, 23) durch Reibschweißen stofflüssig befestigt sind.

2. Elektromotor nach Anspruch 1, **dadurch gekennzeich net,** daß das rohrförmige Verbindungsstück (31) und das B-seitige Endstück (35) aus einem einfachen Kohlenstoffstahl, z. B. aus einem Stahl ST35 oder ST37 bestehen, und daß das A-seitige Endstück (33) aus einem härtbaren Stahl hergestellt ist.

3. Elektromotor nach Anspruch 1 oder 2, **dadurch gekennzeichnet,** daß die Endstücke (33, 35) an ihrem mit dem Verbindungsstück (31) zu verschweißenden Stirnflächen (41, 43) zentrisch angeordnete Sacklochbohrungen (45, 47) aufweisen, derart, daß die zu verschweißenden Flächen der Endstücke (33, 35) und das Verbindungsstück (31) gleich groß ausgebildet sind.

4. Elektromotor nach Anspruch 3, **dadurch gekennzeichnet,** daß ein Endstück (35, 33) eine Druckausgleichsöffnung aufweist.

5. Elektromotor nach Anspruch 4, **dadurch gekennzeichnet,** daß die Druckausgleichsöffnung in dem B-seitigen Endstück (35) angeordnet ist.

6. Elektromotor nach Anspruch 5, **dadurch gekennzeichnet,** daß die Druckausgleichsöffnung aus einer in axialer Richtung zentrisch in dem B-seitigen Endstück (35) angeordneten Durchgangsbohrung (49) besteht.

7. Elektromotor nach einem der vorhergehenden Ansprüche, **dadurch gekennzeichnet,** daß die Endstücke (33, 35) aus Rundmaterial hergestellt sind.

8. Elektromotor nach einem der vorhergehenden Ansprüche, **dadurch gekennzeichnet,** daß das Verbindungsstück (31) eine gerändelte oder gekordelte Außenumfangsfläche (51) für einen Preßsitz des Rotorblechpaketes (13) aufweist.

9. Verfahren zur Herstellung der Rotorwelle für einen Elektromotor nach einem der Ansprüche 1 bis 8, **dadurch gekennzeichnet,** daß die Endstücke (33, 35) mit den Sacklochbohrungen (45, 47) und das Verbindungsstück (31) jeweils getrennt aus Rundmaterial und aus Stahlrohrprofilen mit gleichem Außendurchmesser hergestellt werden, daß dann die Endstücke (33, 35) durch Reibschweißen mit dem Verbindungsstück (31) stofflüssig verbunden werden, daß danach anschließend eine spanabhebende Bearbeitung für die Herstellung der Lagerflächen (37, 39) auf den Endstücken (33, 35), der Lageraufnahmefläche (53) für einen Tacho auf dem B-seitigen Endstück (35), der gerändelten Außenumfangsfläche (51) auf dem Verbindungsstück (31) und des Antriebsritzels (55) auf dem A-seitigen Endstück (33) erfolgt und daß abschließend noch eine Härtung mindestens des Antriebsritzels (55) auf dem A-seitigen Endstück (33) vorgenommen wird.
